# EUROPEAN PATENT APPLICATION

(11) **EP 1 724 677 A1**
(43) Date of publication of application: **22.11.2006**
(21) Application number: 05291082.5
(22) Date of filing: 19.05.2005
(51) Int. Cl.: G06F 9/445

(54) **Memory management system and method in portable device**

(71) Applicant: Axalto SA, 92120 Montrouge (FR)
(72) Inventor: Castillo, Laurent c/o Axalto SA, 78431 Louveciennes (FR); Marchetaux, Jean-Claude c/o Axalto SA, 78431 Louveciennes (FR)
(74) Representative: Cour, Pierre

(57) **Abstract**

The present invention concerns a method for memory management consisting in processing data received in blocks successively in non-volatile memory. The method consists in processing and writing part(s) of each block when received for which the information to be stored and contained by said part(s) is known and in computing a database for all other parts in order to allow their subsequent storage.

## Description

### TECHNICAL FIELD

The present invention concerns the domain of memory management in portable object and more particularly in smart card allowing writing data received in blocks successively in memory without using buffer or deleting previously written data.

### BACKGROUND OF THE INVENTION

A first problem raised by the present invention is the limited resources of a portable object, in particular weak RAM (Random Access Memory) and CPU (Control Processing Unit) efficiency for processing operations such as link, compilation or else.

For example, for the link, a program binary format contains external references, which are locations that are not known at compile-time. External references may concern functions, libraries, variables or else that are called or referenced by said program but not internally defined by said program. As such, the program cannot be executed by a processor. Linking the program is the process of resolving those unknown references in real addresses in the processor memory and so in fixing the location information used by the processor when loading the program into the memory to run it. The processor can then execute the program in its memory. A program may be composed of multiple files, each one in the same binary format.

Traditional personal computers do this linking in RAM, which is fast and relatively abundant, and therefore is done at run-time. Most portable objects cannot afford this RAM consumption and therefore execute code in-place (in internal NVM: Non-Volatile Memory): a program is linked statically once and for all in the NVM, and can be executed each reboot without updates. As writing in NVM is slow, linking is also a time-consuming process.

Generally, on portable objects, linking is mostly done outside the object; the program can then be loaded only at a given address, with a proprietary protocol. It is mainly done once, when the memory is virgin, to load the full program in the portable object memory. It greatly lacks flexibility and extensibility.

Nowadays, linking inside the card is only done for languages with virtual machines like java or .NET. Even on those, linking is done first by loading the program file and next doing the link in NVM, which is time-consuming and requires extra writes to NVM. Moreover, with the introduction of new non-volatile memories like FLASH where erasing is a very slow operation in comparison to the writing operation, that process may not be usable anymore.

Another problem raised by the present invention is linking of native code. Performance constrained code is often written in native form, because it has better intrinsic performances than interpreted code (java, .net, etc...). Being able to load and link such code at run-time is critical for updating and introducing new advanced services, for instance web services. Typically, native executable file formats are quite larger than interpreted ones (which are made to be small), which is why native link has not been done on very resources constrained portable platform. Moreover, not all the information in the executable file format is needed at run-time.

In addition, new memory technologies, like flash, introduce new issues. Flashes are erased by pages, which can vary in size greatly. For interpreted languages linking, it is not possible to link in place, because it would produce too much page erases (performance decrease and life time impact). Even with caching that process in RAM, the portable object basically ends up writing the file twice: once on the first load, one more time when it must erase/re-write each page in the executable file after link (it is very likely that there will be at least one reference to update per pages). The invention introduces a way to circumvent these limitations on those memories.

An aim of the present invention is to allow linking native code on a portable object.

Another aim of the present invention is to optimize the link process in itself (for every kind of linking), in order to minimize both the time and the RAM required.

Another aim of the present invention is to allow linking in portable object including technologies such as Flash memory.

Another aim of the present invention is to allow specific processing having the same constraints as linking in a portable object.

### SUMMARY OF THE INVENTION

The method for memory management according to the present invention consisting in processing data received in blocks successively in non-volatile memory, is characterized in that it consists in processing and writing part(s) of each block when received for which the information to be stored and contained by said part(s) is known and in computing a database for all other parts in order to allow their subsequent storage.

### BRIEF DESCRIPTION OF THE DRAWINGS

Other purposes, features and advantages of the invention will appear on reading the description which follows of the implementation of the method according to the invention and of a mode of realization of a portable object designed for this implementation, given as a non-limiting example, and referring to the attached drawings in which:
- figure 1 is a schematic view of an example of realization of an electronic unit integrated in a portable object such as a smart card designed to implement the method according to the present invention;
- figure 2 is a diagram representing different steps of an example of realization of the linking method according to the present invention;
- figure 3 is a diagram of an example of realization of the step "DB build" of the linking method represented on figure 2;
- figure 4 is a schematic view of an optimization of the linking method according to the present invention;
- figure 5 is a schematic view of another optimization of the linking method according to the present invention ;
- figure 6 is a schematic view of another optimization of the linking method according to the present invention.

### BEST WAY OF REALISING THE INVENTION

The method according to the present invention allows performing specific processing such as on the fly linking, compiling or else in a device such as a portable object (for example a smart card, a token, a PDA, a cell or else) having constraints as explained here above and which may include technologies such as Flash memory.

The context of the present invention is processing and writing into a device and for example a smart card, data received in blocks successively for which the information to be stored and contained by a part of said received data in memory is not necessarily known when receiving said block, but will be known when other associated blocks are received. The method for memory management according to the present invention consists in processing and writing part(s) of each block when received for which the information to be stored and contained by said part(s) is known (for the application of linking the part concerned is the part which does not comprise any unknown references) and in computing a database for all other parts in order to allow their subsequent storage. The present invention consists additionally in keeping blank areas in memory for the subsequent storage of said other parts. The database saves information allowing to locate said blank areas and to identify the unknown references. When the reference is resolved, the database contains the information needed to resolve said reference (in case of linking, the address of the reference).

In the linking embodiment, all information contained in the blocks received are written in NVM except the unknown references for which blank areas are provided to store the future resolved reference, the address of the reference.

The term "database" has a very large meaning: a "database" is a set of data allowing the storage of information (here provisional) in a structured way.

When applying the method of the present invention to the linking, the linking process consists in working directly in RAM the received blocks by computing a database of unresolved references for future use and in saving received and resolved parts in NVM and keeping blank areas for the references to be resolved. The database is used to resolve references and update NVM: partial resolving of the database may be done on interesting points.

Many advantages are offered by said linking method: there is no need of buffer to store the received data in NVM. Database is smaller than the whole program. Each byte is written once and only once (advantageous for technologies as FLASH) by means of the blank areas. Partial resolving reduces database at runtime and increases performance.

Here after is described in detail an example of embodiment of the present invention illustrating the linking of native code in a smart card comprising Flash memory.

This invention belongs to the field of portable object provided with at least processing means as for example a processor, memory means and input/output means allowing said portable object to work and dialog with another device, and in particular to receive data to be linked in said portable object.

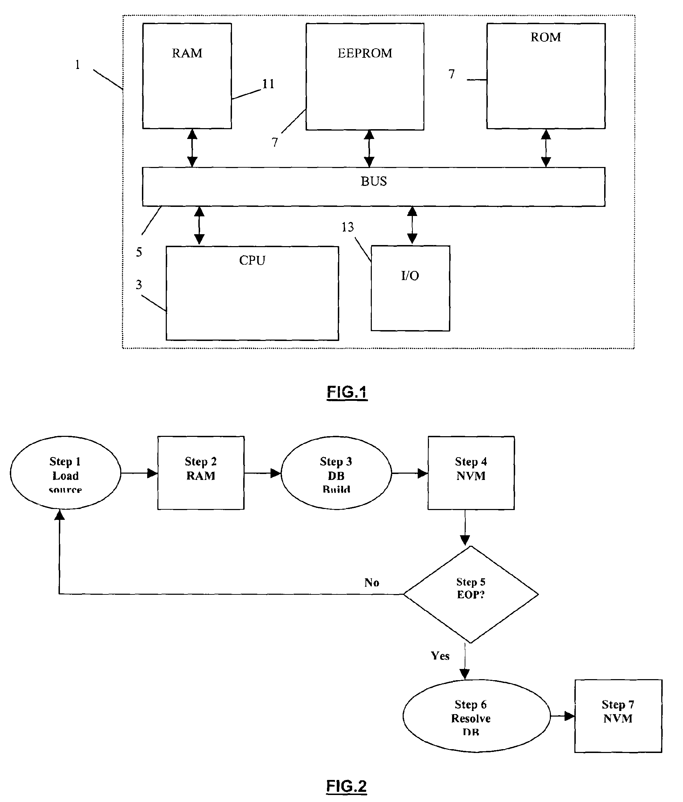

In a particular embodiment of the present invention shown in figure 1, the portable object is a smart card with an integrated electronic unit 1: the electronic unit 1 comprises at least a microprocessor CPU 3 with two-way connection via an internal bus 5 to a non volatile memory 7 of type ROM, EEPROM, Flash, FeRam or else, a volatile memory 11 of type RAM and input/output means 13 to communicate with the exterior. The unit 2 may comprise additional components not shown, connected to the internal bus. This type of unit is generally manufactured as a monolithic integrated electronic circuit, or chip, which once physically protected by any known means can be assembled on the integrated circuit card or similar for use in various fields, such as for example the bank and/or electronic payment cards, mobile radio telephony, pay television, health and transport.

On portable objects, executable program is loaded from an external source, which can be an outside storage (external memory, hard drive, etc...) or an I/O line. This transport mechanism cuts the program in blocks, typically an APDU (Application Protocol Data Unit) on a smart card (256 bytes) or an Ethernet frame (1500 bytes). That block fits into RAM, and is actually received in RAM. So, as illustrated on figure 2, the load source (step 1) in the portable object receives the file, the program or more generally the data to link by packets or blocks, which are sent to RAM (step 2).

The invention consists in working directly in this RAM block just received ("on-the-fly") to compute a database (step 3-DB Build) of unresolved references for future use, and in saving the part of the block, which does not comprise any reference in NVM (steps 4 and 7). The process may be ordered differently: the part of the block received, which does not comprise any reference, is saved in NVM and then the database is computed. This process is applied on each block received while the program end is not reached (step 5). The database is compressed and much smaller than the whole program.

The particular embodiment of the present method illustrated on figure 2 is explained in detail here after. The linking method comprises the step of building a database of unresolved references allowing linking of the concerned data subsequently (step 3). In step 3, it is checked if the received block does not contain an identified unresolved reference in the database. If so, the database is updated with the found resolved reference. The linking method comprises the step of writing in NVM parts of the received block for which the information to be stored and contained by said parts are known since said parts do not comprise any unknown references which need to be resolved with information received subsequently (step 4). The process goes on step 5. It is checked if the end of the program loading is achieved (EOP?; End of program? ; step 5). If the end of the program loading is reached (Yes for EOP; step 5), the database is used to resolve references (step 6 - Resolve DB), i.e. to compute the final locations of all references that are consequently updated in NVM (step 7), completing the link process. The overall resolution is launched. If the end of the program loading is not reached (No for EOP ; step 5), the next block is asked from the load source.

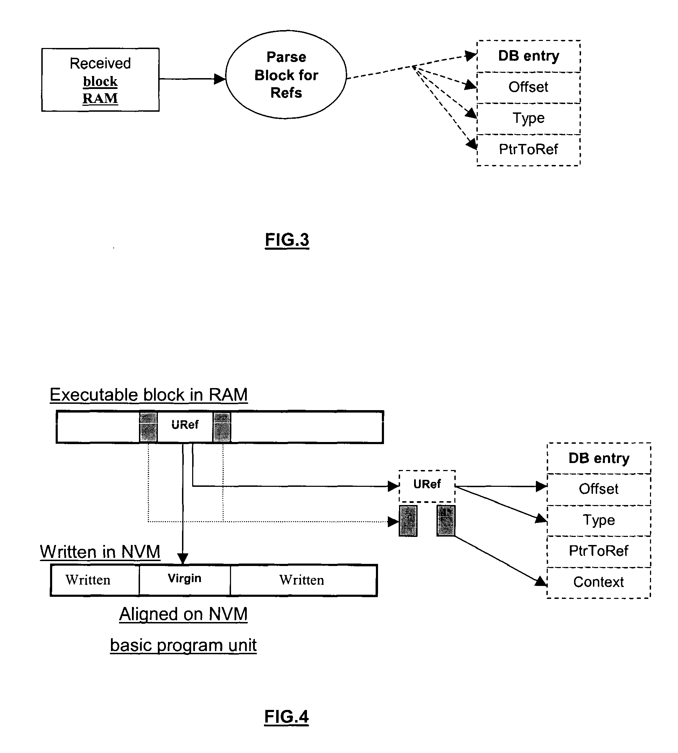

To build the database (step 3), each block received is parsed to identify relocation entries, which are references to be resolved. As seen in figure 3, a parse process is applied on each received block to create said database. These entries are converted in compressed database entries (DB entry on figure 3), storing two types of information:
- Information allowing to locate the areas where the resolved references have to be stored, and in the present described embodiment, the blank areas. Said information may comprise an offset, a type of relocation (for instance absolute (no offset) or relative if the relocation is defined by said offset);
- Information allowing before the reference is resolved, to identify said unresolved reference and when resolved, the information needed to resolve the entry (in case of linking, the location of the reference, ie the address of the reference and for example a pointer).

When parsing each block received, an unknown reference may be identified. As for each other block, the method according to the present invention consists in saving the part of the block, which does not comprise any reference in NVM and in computing a DB entry if needed. If an unknown reference is identified in said block, the method consists in updating the concerned DB entry and more particularly, in storing the information to resolve the entry in the PtrToRef field.

An important optimization is done when copying into NVM. The bytes of the reference to be resolved are left empty in NVM and will be filled only during the resolve phase, directly with the correct value. The NVM comprises holes. Thus each byte in the loaded file is written once and only once (gain of performance and life time). This is especially important for flashes, because we only need to erase once, at the very beginning.

NVM are typically programmed in units of 1 to 4 bytes: if the reference bytes are less than that basic NVM program unit, the DB entry is extended with a context which contains saved bytes around the reference (see the grey boxes in figure 4). This context is used at the last stage to restore the area in NVM.

Figure 4 described in detail said optimization. A block contains an unresolved reference [uref]. The alignment to the basic program unit of NVM is shown [Gray boxes]. [uref] and [Gray boxes] are used to compute the DB entry. In particular [Gray boxes] is added to a new context area.

In a particular embodiment of the present invention, the NVM is rendered virgin before the beginning of the process of linking or any other process of memory management.

Another optimization is to make a partial resolve of the database on specific, interesting points, for instance at the end of a file (if the program is in multiple files), or after each sections or after a method descriptor, marker or equivalent.

We solve only the references concerned and update their NVM location if possible. It has two advantages: first, it reduces the database size at run-time, which increase performances and linkable size; second, it better balances the load between each phase, rendering the last resolve more efficient.

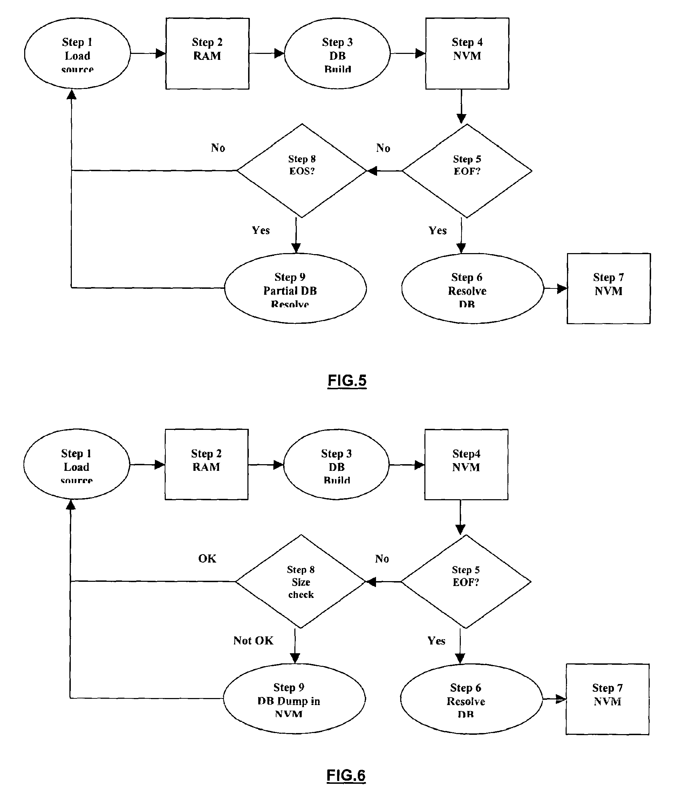

As seen from figure 5, said optimization results in additional steps 5, 8, 9 EOF/EOS (End of File / End of File Section), Partial DB resolve, in the method illustrated on figure 1. The function of said new steps 5, 8, 9 is to determine if a partial resolve has to be launched when the End of File is reached (for programs with multiple files), or when the end of a file section is reached for example (steps 5 and 8). If so, a partial resolve computes (step 9), and updates in NVM, as much references as possible at the time being.

The last proposed optimization is for solving the problem of database size. It may happen for really bad cases or really small RAMs that the database becomes bigger than the available size. It is then possible to dump part of the database in NVM to continue the link process. As the database is really smaller than the program size, it uses much less NVM than dumping the program and is therefore more efficient. Some database entries are especially prone to be dumped in NVM, like names entries and section headers. The best implementation takes the type into account to dump entries in NVM that will not need to be processed, but only used for information (no need to "restore" the database in RAM in that case).

Fig 6 describes an optimization in which we add the database size check test (new steps 8 and 9). If the database becomes too big, i.e. when the size of the database reaches a predetermined threshold (step 8), it is partially saved in NVM database (step 9). That NVM database is then directly used during the last resolve phase.

The two last optimizations are not contradictory and may be implemented on the same portable object.

Another application of the memory management method according to the present invention could be for example on-the-fly compilation. The constraints are the same.

## Claims

1. Method for memory management consisting in processing data received in blocks successively in non-volatile memory, **characterized in that** it consists in processing and writing part(s) of each block when received for which the information to be stored and contained by said part(s) is known and in computing a database for all other parts in order to allow their subsequent storage.

2. Method according to claim 1 **characterized in that** it consists in keeping blank areas in memory for the subsequent storage of said other parts.

3. Method according to one of the claims 1 or 2, **characterized in that** it consists in processing said received parts and in computing said database in RAM.

4. Method according to one of claims 1 to 3, **characterized in that** it allows linking of received parts by building a database of unresolved references for future use and by saving received and resolved parts in non-volatile memory.

5. Method according to claim 4, **characterized in that** a database entry comprises the offset of the received part, the type of relocation and/or needed information to resolve said entry.

6. Method according to one of the claims 1 to 5, **characterized in that** partial resolving of the database is done on interesting points.

7. Method according to one of the claims 1 to 6, **characterized in that** the interesting points are end of section, file, program or any equivalent code section or indicated by descriptors and **in that** the partial resolving consists in solving all the references of the database or all the references of the concerned section, file, program or any set of code in the database, or all the references of the section code defined by descriptors and in updating the non-volatile memory locations.

8. Method according to one of the claims 1 to 7, **characterized in that** it consists in checking the database size and dumping said database in non-volatile memory when required by said test.

9. Computer program including program code instructions to execute the method according to one of claims 1 to 8 when said program is run in a data processing system.

10. Method for linking data received in blocks successively in non-volatile memory, **characterized in that** it consists in processing and writing resolved part(s) of each block when received and in computing a database of unresolved reference for all other parts in order to allow their subsequent storage.
